# EUROPEAN PATENT SPECIFICATION

(11) **EP 3 369 915 B1**
(45) Date of publication and mention of the grant of the patent: **21.10.2020**
(21) Application number: 16859800.1
(22) Date of filing: 25.10.2016
(51) Int. Cl.: F02D 29/02, F02D 17/00, B66C 23/40, B66C 23/42, B66C 23/78, F02N 11/08, B66C 13/20, B66C 23/70

(54) **WORK MACHINE AND ENGINE STOPPING CONTROL DEVICE**
ARBEITSMASCHINE UND MOTORSTOPPSTEUERUNGSVORRICHTUNG
MACHINE DE TRAVAIL ET DISPOSITIF DE COMMANDE D'ARRÊT DE MOTEUR

(30) Priority: 30.10.2015 JP 2015214156
(43) Date of publication of application: 05.09.2018
(73) Proprietor: Tadano Ltd., Takamatsu-shi, Kagawa 761-0185 (JP)
(72) Inventor: IKIYAMA, Takero, Takamatsu-shi Kagawa 761-0185 (JP)
(74) Representative: MFG Patentanwälte Meyer-Wildhagen Meggle-Freund Gerhard PartG mbB
(86) International application number: PCT/JP2016/081610
(87) International publication number: WO 2017/073570

(56) References cited:
- EP-A1- 2 774 888
- GB-A- 2 425 368
- JP-A- S4 944 452
- JP-A- H05 105 397
- JP-A- H05 105 397
- JP-A- 2002 332 194
- JP-A- 2010 127 098
- JP-A- 2010 127 098
- JP-A- 2010 265 864
- JP-A- 2012 067 666

## Description

### Technical Field

The present invention relates to a work machine comprising an engine stopping control device.

### Background Art

A work machine such as a mobile crane generally includes a work apparatus that performs predetermined work, and an engine that is a motive power source for driving the work apparatus. The work apparatus is composed of a boom, a single top, a jib and the like, and these operate independently or in cooperation to perform crane work.

In the crane work, respective states of work apparatuses need to be set in accordance with the crane work contents. As this state setting, for example, the overhang widths of outriggers, and the swivel angle of a swivel base, and/or the derricking angle and the extension and contraction length of a boom, and the like can be set in accordance with the movement range or the load of a cargo used in crane work. In other words, it is necessary to perform setting for avoiding an overload state of a work machine such as a mobile crane depending on the work content.

For example, PTL 1 discloses the contents for selecting and setting a boom angle, a load ratio, and the like, as a condition necessary for safely performing crane work.

Such state setting is performed for each work apparatus in the crane work in detail. For example, the state setting is performed in consideration of work environment (such as a weather condition and the ground) in addition to the work contents of the crane work. In order to more safely perform the crane work and to more suitably enhance work efficiency, more suitable setting needs to be performed. Therefore, a lot of time may be required in order to perform setting work depending on the work contents of the crane work and work environment. PTL 2 discloses a working vehicle according to the preamble of claim 1 in which, in response to the operation of an operating lever by an operator after idling stop of the engine, control is effected to automatically restart the engine in such a manner that the working vehicle will not unexpectedly move. After the idling stop of the engine, when a lock lever is brought to a lock position, a hydraulic circuit is controlled to cause the working vehicle to enter in its inoperable state in which the working vehicle will not move. Thereafter, when a particular operation is applied to the operating lever, the engine is restarted. After restarting of the engine, only when all operating levers are in the neutral position, the lock lever is released from its locked state. Whereupon the hydraulic circuit is gradually restored to its normal operable state, the working vehicle can move.

### Citation List

### Patent Literature

PTL 1: Japanese Patent Application Laid-Open No. 2013-217224
PTL 2: UK Patent Publication No. GB 2425386 B

### Summary of Invention

### Technical Problem

During the setting work of setting information required for crane work as described above, when an engine is stopped by an idling stop function, there is a case where the setting information set before the engine stop is changed after the engine is stopped. In some cases, the setting content is reset to an initial setting value.

Therefore, an object of the present invention is to provide a work machine and an engine stopping control device capable of efficiently performing setting work related to crane work.

### Solution to Problem

In order to achieve the above object, the present invention includes: a work apparatus that performs predetermined work; an engine stop section that stops an engine on the basis of a predetermined engine stop condition; a setting section that is used at a time of the predetermined work, and is capable of setting a work mode in the work apparatus; a determination section that determines whether or not a setting state in which the work mode is set by the setting section is kept; and an engine stop inhibition section that inhibits the engine from being stopped by the engine stop section even when the engine stop condition is established, in a case where the determination section determines that the setting state is kept.

### Brief Description of Drawings

FIG. 1 is a diagram illustrating a mobile crane according to an embodiment of the present invention;
FIG. 2 is a block diagram illustrating an example of apparatuses provided in the mobile crane according to the embodiment of the present invention;
FIG. 3 is a diagram illustrating a screen displayed on a display of the mobile crane according to the embodiment of the present invention;
FIG. 4 is a flowchart illustrating a process performed by a controller constituting the mobile crane according to the embodiment of the present invention.

### Description of Embodiments

Hereinafter, an embodiment of mobile crane 1 according to the present invention will be described in detail with reference to the attached drawings.

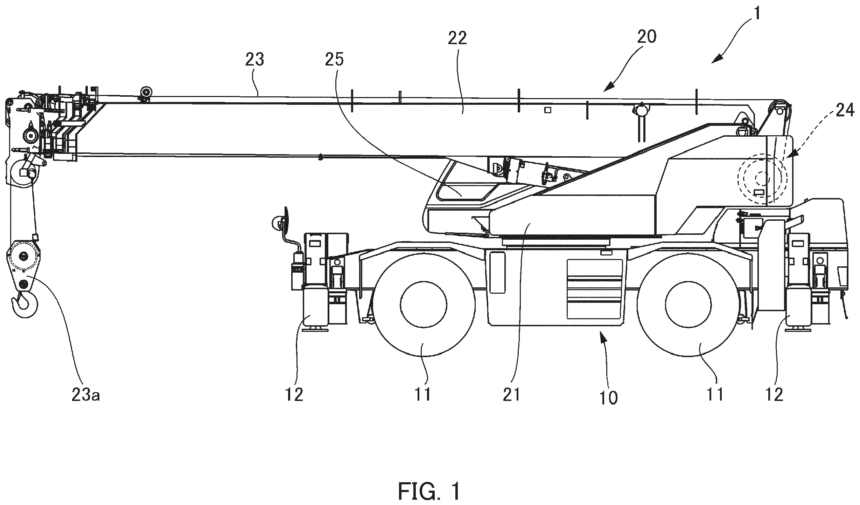

FIG. 1 is a diagram illustrating mobile crane 1 according to an embodiment of the present invention. Mobile crane 1 is illustrated as an example of a work vehicle.

Mobile crane 1 (hereinafter, simply referred to as a "crane") illustrated in FIG. 1 includes vehicle 10 as a traveling body, and crane apparatus 20 that is a work apparatus which performs "crane work" for lifting a cargo (object to be worked) and turning horizontally to transport the cargo. This crane work is an example of "predetermined work" performed by crane apparatus 20, and crane apparatus 20 is an example of a work machine or a work apparatus that performs the "predetermined work".

Vehicle 10 is a machine body that supports crane apparatus 20. Vehicle 10 uses, as a motive power source, an engine being an internal combustion engine, and rotates wheels 11 to travel. In this vehicle 10, outriggers 12 that stably support vehicle 10 or a crane itself to prevent falling at the time of crane work are provided at front two portions and rear two portions, a total of four portions.

Outrigger oil hydraulic circuit 61b drives overhanging cylinders 60e on the basis of a control signal from controller 50 described below, so that each of outriggers 12 can overhang to the outside in the width direction of vehicle 10. Outriggers 12 can extend downward when outrigger oil hydraulic circuit 61b drives hydraulic jack cylinders 60f on the basis of a control signal from controller 50. Outriggers 12 extend jack cylinders 60f downward to be grounded at four portions, so that vehicle 10 is stably supported with respect to the ground.

Crane apparatus 20 includes swivel base 21, boom 22, wire rope 23, winch 24, and cab 25. Swivel base 21 is provided at a substantially central part in the longitudinal direction of vehicle 10 so as to be able to swivel on a horizontal plane. Boom 22 is provided so as to be able to rise and fall with respect to swivel base 21 and so as to be able to extend and contract. Wire rope 23 is suspended from a distal end of boom 22. Winch 24 performs reeling and unreeling of wire rope 23. Cab 25 is provided on a front side of swivel base 21. Cab 25 is an operation stand for performing operation related to traveling of vehicle 10 and work by crane apparatus 20.

Swivel base 21 swivels with respect to vehicle 10 by driving of swivel motors 60a. Boom 22 rises and falls from swivel base 21 with derricking cylinders 60b.

On the basis of a control signal from controller 50 described below, boom oil hydraulic circuit 61a drives extension and contraction cylinders 60c, so that boom 22 can extend and contract the length. At this time, boom oil hydraulic circuit 61a drives derricking cylinders 60b together with extension and contraction cylinders 60c, so that boom 22 can be raised and fallen with the extension and contraction of boom 22.

Winch 24 performs reeling and unreeling of wire rope 23 suspended from the distal end of the boom by rotation of winch motors 60d. Thus, a cargo can be lifted and suspended by a bucket or snatch block 23a suspended from the distal end of boom 22.

Therefore, each work, or cooperated work is referred to as "crane work".

Swivel motors 60a, derricking cylinders 60b, extension and contraction cylinders 60c, and winch motors 60d each are an example of an actuator 60 that operates with hydraulic oil (oil) in order to implement each function. In addition to the above, various actuators 60 (not illustrated) exist.

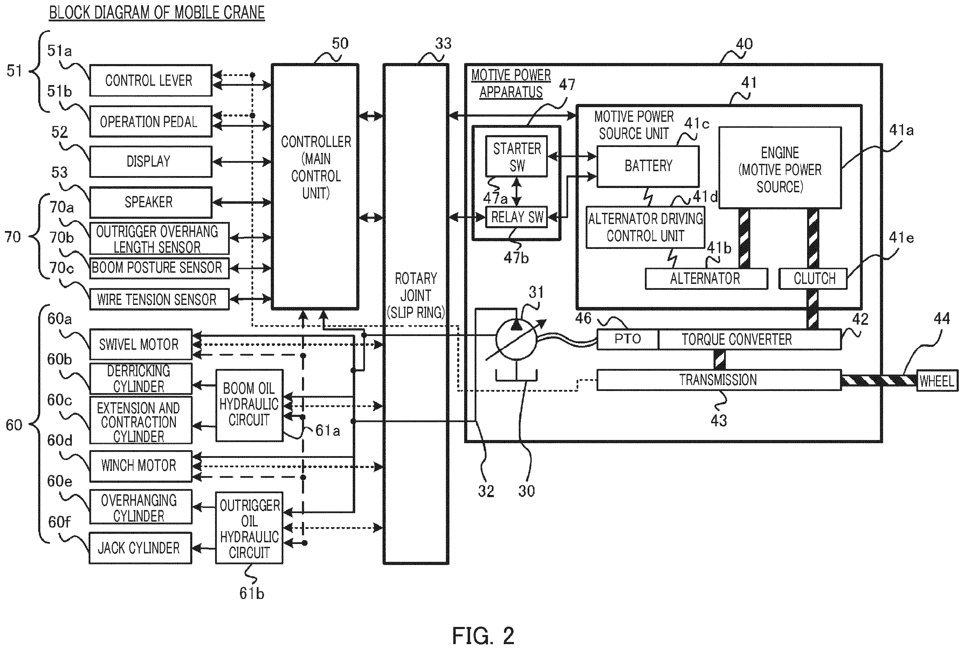

FIG. 2 is a block diagram illustrating an example of apparatuses provided in the mobile crane according to the embodiment of the present invention.

Mobile crane 1 has oil pressure supply apparatus 30, rotary joint 33, motive power apparatus 40, and controller 50. Oil pressure supply apparatus 30 is used during traveling of vehicle 10 or during work by crane apparatus 20. Rotary joint 33 connects vehicle 10, and crane apparatus 20 which rotates with respect to the vehicle. Motive power apparatus 40 operates by using oil supplied from oil pressure supply apparatus 30. Controller 50 controls motive power apparatus 40 on the basis of an instruction from a worker.

Oil pressure supply apparatus 30 supplies hydraulic oil (oil) to respective actuators 60 in order to implement respective functions in actuators 60 such as swivel motors 60a, derricking cylinders 60b, extension and contraction cylinders 60c, and winch motors 60d.

Oil pressure supply apparatus 30 includes oil hydraulic pump 31 that generates oil pressure in order to supply (discharge) the hydraulic oil to each actuator 60, and oil hydraulic circuit 32 for supplying, to each actuator 60, the hydraulic oil discharged from oil hydraulic pump 31.

Oil hydraulic pump 31 is composed of, for example, a swash axial plunger oil hydraulic pump, and a variable displacement oil hydraulic pump capable of changing the angle of a swash plate. Oil hydraulic pump 31 drives with motive power taken out from motive power apparatus 40. Motive power apparatus 40 generates motive power for allowing vehicle 10 to travel, and transmits the motive power to wheels 11.

Actuators 60 provided in crane apparatus 20 are connected to oil hydraulic circuit 32 through rotary joint 33. A plurality of control valves (not illustrated) are provided in oil hydraulic circuit 32, and the flow rate and the flow direction of hydraulic oil that flows in each actuator 60 are controlled by each control valve. For each control valve, the flow rate of hydraulic oil is adjusted by a worker (driver) operating operation input part 51 provided in cab 25, in accordance with an amount of operation. Operation input part 51h is composed of control lever 51a, operation pedal 51b, and the like. Each control valve has a switching section such as a solenoid, and adjusts the flow rate of hydraulic oil in accordance with a signal from controller 50.

Rotary joint 33 is a rotation apparatus that connects vehicle 10 as a traveling body and crane apparatus 20 that rotates. Rotary joint 33 transmits and receives various electrical signals between vehicle 10 and crane apparatus 20 that rotates with respect to vehicle 10 through an interface such as a slip ring. In other words, it can be said that vehicle 10 is a stationary body, and crane apparatus 20 is a rotating body, as viewed from crane apparatus 20.

Motive power apparatus 40 includes at least motive power source unit 41 that generates motive power, torque converter 42, transmission 43, propeller shaft 44, and starter 47. Torque converter 42 converts torque to transmit, to the sides of wheels 11, motive power output from motive power source unit 41. Transmission 43 changes the rotating speed and the torque of the motive power output from torque converter 42. Propeller shaft 44 transmits, to wheels 11, the motive power output from transmission 43. Starter 47 that instructs motive power source unit 41 on running (start) of the motive power source.

Motive power source unit 41 includes engine 41a that is a motive power source, alternator 41b, battery 41c, alternator driving control unit 41d, and clutch 41e. Alternator 41b functions as an electric motor, and functions as a generator with motive power of engine 41a. Battery 41c stores electric power generated by alternator 41b, and is capable of supplying the electric power in a case where alternator 41b functions as the electric motor. Alternator driving control unit 41d controls output of battery 41c, and controls operation of alternator 41b. Clutch 41e is capable of switching transmission and cutting of output of engine 41a to torque converter 42.

Alternator 41b is also referred to as a "motive power generation part." Alternator 41b generates electric power with motive power output from engine 41a to store the electric power in battery 41c through alternator driving control unit 41d (stores electric power).

Battery 41c is a power source (electric power supply source) used in controller 50 and various electric circuits. Battery 41c supplies the electric power to controller 50 and the electric circuit according to an instruction from starter 47.

Battery 41c is regularly charged (stores electric power) by alternator 41b in a case where engine 41a is run, and traveling or crane work is performed. In other words, even when electric power of battery 41c is used for the traveling or the crane work, battery 41c can be made to timely hold optimum charge capacity by the charging from alternator 41b. The optimum charge capacity of battery 41c at this time is, for example, a "full charge state".

Battery 41c is composed of a lithium ion battery or the like. Charge capacity (storage battery capacity) charged in battery 41c decreases in accordance with the use state in addition to natural discharge due to use environment and the like. For example, in a case of use at a high temperature which exceeds a prescribed temperature, or in a case of continuation of charging by further application of a voltage in a full charge state (trickle charging), the electric power of battery 41c decreases at a relatively high speed.

Alternator driving control unit 41d is also referred to as an "electric power control unit." Alternator driving control unit 41d has an inverter, a boost converter, a motor control unit, a generator control unit, and the like, controls output of battery 41c to supply electric power to alternator 41b, and switches the function of alternator 41b to the generator or the electric motor in accordance with a signal from controller 50. Additionally, in alternator driving control unit 41d, power source cable (illustration is omitted) for connection to an external power source is connectable, and the power source can be switched to battery 41c or the external power source in a case where alternator 41b functions as the electric motor. For the external power source, for example, a power source such as 3-phase AC 200 V and 3-phase AC 400 V is used.

A PTO (power take-off) mechanism 46 capable of taking out motive power transmitted to transmission 43 is provided on the output side of torque converter 42. Torque converter 42 is connected to oil hydraulic pump 31 through PTO mechanism 46. PTO mechanism 46 is capable of switching connection and disconnection between oil hydraulic pump 31, and an output shaft of engine 41a and input and output shafts of torque converter 42.

Starter 47 is composed of starter switch 47a (illustrated as a "starter SW"), and relay switch 47b (illustrated as a "relay SW"). Starter 47 causes a function and an apparatus necessary for engine 41a and crane work to run.

Starter switch 47a is a switch that connects battery 41c and controller 50 during traveling of vehicle 10, during crane work, or the like. Relay switch 47b is switch that connects or disconnects battery 41c and controller 50 by an excitation coil or the like which magnetizes a magnetic substance to relay (transmit) electric power (power source).

Controller 50 is composed of a CPU, a ROM, a RAM, a timer, and the like. When the CPU receives an input signal from a connected apparatus, a program stored in the ROM is read out on the basis of the input signal, a state detected in accordance with the input signal is stored in the RAM, and an output signal is transmitted to the connected apparatus. Time information timed by the timer can be used for a process performed in the CPU at this time.

To this controller 50, each actuator 60, control valve (not illustrated) corresponding to each actuator 60, oil hydraulic pump 31, motive power source unit 41, operation input part 51, touch panel type display 52 (combines an input apparatus and a display apparatus), and speaker 53 are connected. Operation input part 51 is composed of as control lever 51a and operation pedal 51b for performing operation of vehicle 10 and crane apparatus 20, for example. Display 52 performs various setting such as traveling of vehicle 10 and driving of crane apparatus 20. Speaker 53 gives sound notification that crane apparatus 20 is under driving to a worker therearound. In addition, outrigger overhang length sensor 70a that detects an overhang length (actual overhang length) of each outrigger 12, boom posture sensor 70b that detects the posture of boom 22, and wire tension sensor 70c that detects the tension of the wire caused by the winch are connected to controller 50.

When the mobile crane is in a traveling state, in addition to information related to this traveling state, information related to crane work can be displayed on display 52. As this information related to crane work, information used in the crane work can be set in a state before crane work (pre-crane work state) on display 52. In addition to the above, information indicating a work state in a state in which the crane work is being performed (crane work state) can be displayed.

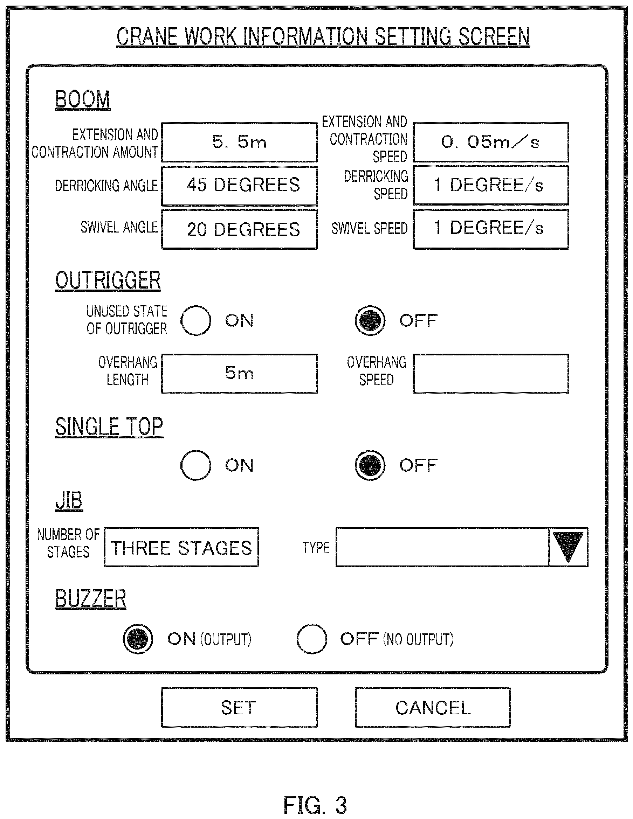

Particularly, examples of the information set in order to perform crane work include information for determining the work posture of mobile crane 1 and the like in crane work. When this work posture is determined, rated load in crane work is determined, and safer work is possible. An example of a screen that sets information used in the crane work at this time is illustrated in FIG. 3, which will be described below.

This information set in order to perform crane work includes information (for example, the rotating speed of an engine) that may be changed before or after the stop of the engine when an engine is stopped by idling stop described below.

The rated load is determined in accordance with work conditions such as the overhang width of each outrigger 12, the swivel angle of the swivel base, the extension and contraction length of the derricking angle of boom 22. It is recommended that crane work is performed within this rated load. On the contrary, the rated load indicates that a risk such as falling increases, when the crane work is performed in a state in which load exceeds this rated load, in a so-called overload state.

Outrigger overhang length sensor 70a, boom posture sensor 70b, and wire tension sensor 70c can grasp the work posture of mobile crane 1 along with respective actuators 60 described below. Outputs of sensors 70a to 70c correspond to the information that is set in accordance with the contents of crane work when the crane work is performed.

This outrigger overhang length sensor 70a is a sensor that detects the overhang length thereof between a minimum overhang length and a maximum overhang length. For example, outrigger overhang length sensor 70a can detect an outrigger inner position by means of a plurality of switches provided in outrigger 12 to detect the overhang length.

Boom posture sensor 70b is composed of a strain detector, a derricking angle detector, a boom length detector, a swivel angle detector, and the like. Boom posture sensor 70b can grasp the work posture of boom 22 in accordance with information of these detectors. The strain detector at this time is mounted on the derricking cylinder, and can detect a load amount (load moment amount) on the entirety of boom 22. The derricking angle detector is mounted on boom 22 itself, and can detect the derricking angle of the boom being in a rising and falling state. In addition to the above, the boom length detector is mounted on the boom itself, and can detect the extension and contraction amount of the boom. The swivel angle detector can detect the swivel angle of the swivel base.

Wire tension sensor 70c is mounted on the distal end of boom 22, and detects wire tension.

The information related to crane work is set by setting these information.

In addition to the above, a signal related to a driving state of each actuator 60 is input to controller 50. When this signal is input, controller 50 outputs a signal to each control valve or display 52 on the basis of the signal related to the driving state of each actuator 60. Additionally, a signal related to electric power supplied to a connection part of alternator driving control unit 41d connected to power source cable 41f is input to controller 50. Controller 50 detects the existence/absence of connection of the external power source on the basis of a voltage of the external power source supplied to the connection part.

In thus configured mobile crane 1 as a work machine, in a case where work by crane apparatus 20 is performed, oil hydraulic pump 31 can be driven by any of motive power of engine 41a, electric power of battery 41c, and electric power of the external power source.

Furthermore, controller 50 determines whether or not an engine stop condition (also referred to as an "idling stop permission condition" in addition to the above) for permitting stop of engine 41a. For example, the engine stop condition includes a case where an input signal is not continuously received from at least one of control lever 51a, operation pedal 51b, display 52, and speaker 53 for a fixed time, and consequently driving operation by actuator 60 is not performed for a fixed time, or a case where predetermined operation by a worker (driver) is not performed for a fixed time, is established. The stop of the engine at this time is generally referred to as "idling stop".

The engine stop by the idling stop is different from engine stop caused after starter switch 47a is brought into an invalid (OFF) state by stop operation of engine start/stop switch (engine key), and indicates that the engine is stopped while starter switch 47a is in a valid (ON) state.

In other words, the engine stop by the idling stop indicates a state in which a current is relayed from battery 41c to each electric apparatus by relay switch 47b, and a state in which operation and control of each electric apparatus is possible.

Furthermore, the engine is in the stop state by the idling stop, and therefore alternator driving control unit 41d is in a state in which electric power cannot stored in battery 41c by electric power generated from alternator 41b. On the other hand, as described above, a current is relayed from battery 41c to each electric apparatus, and therefore the storage battery capacity of battery 41c decreases. As the idling stop state is continued, the storage battery capacity of battery 41c is decreased.

Consequently, battery 41c cannot obtain electric power necessary for rotating the engine (starting the engine) in the idling stop state, and cannot start the engine. This means that mobile crane 1 can neither travel nor perform crane work.

Therefore, controller 50 measures the remaining capacity of the storage battery capacity of battery 41c by using a measurement apparatus (not illustrated) such as a tester and a sensor provided in motive power source unit 41. Then, when it is determined that storage battery capacity of battery 41c falls under predetermined capacity as measured by the measurement apparatus, controller 50 restarts engine 41a to cause alternator driving control unit 41d to start charging of battery 41c.

Then, controller 50 determines whether or not the work mode of a work apparatus used in crane work which is an example of predetermined work is set, in a case where it is determined that the idling stop permission condition is established. This "state in which the work mode of a work apparatus used in crane work is set" is a state in which information used in crane work is set by a worker, for example, a state in which a crane work information setting screen (setting state) illustrated in FIG. 3 is displayed. More specifically, this crane work information setting screen is displayed, and the mode information (or flag information) of a "crane work setting mode" is managed in a RAM or the like.

Controller 50 inhibits (prohibits) the engine from being stopped based on the establishment of the idling stop permission condition in a case where it is determined that the idling stop permission condition is established (i.e., when the mode information is managed in the RAM) in a state where information related to crane work is set by a worker in this determination process. In other words, the driving of the engine is continued, and before or after engine stop, control is performed such that the information displayed on the screen described in FIG. 3 is not changed. On the other hand, in the case where it is determined that the idling stop permission condition is established (when the mode information is not managed in the RAM) in the state where information related to crane work is not set, controller 50 transmits an engine stop signal to motive power source unit 41.

As a inhibition method for this idling stop, for example, there is a method for invalidating the establishment of the idling stop permission condition (performing a change for invalidating the establishment of the idling stop permission condition), in addition to a method for making controller 50 cut (invalidate) an engine stop signal transmitted to motive power source unit 41.

In the above, a process of the case of the establishment of the idling stop permission condition when "information related to crane work" is set by a worker in a state where the engine is driving is described. However, in a state where the engine is stopped by the idling stop, the screen described in FIG. 3 is displayed, and the information related to crane work may be unable to be set. Of course, the information related to crane work may be able to be set with the screen displayed as illustrated in FIG. 3. In the latter case, setting is performed in a state in which the engine is already stopped by the idling stop, and therefore a phenomenon that the idling stop permission condition is established when the "information related to crane work" is set in a state where the engine is driving never occurs.

FIG. 3 is a diagram illustrating an example of the crane work information setting screen displayed on the display of the mobile crane according to the embodiment of the present invention.

FIG. 3 is an example of the crane work information setting screen displayed on a touch panel type display. This FIG. 3 illustrates a screen enabling setting of the information related to crane work (for example, crane work posture information) as the information related to crane work. The rated load of load which acts on boom 22 or a distal end of a single top is derived by setting these information.

FIG. 3 illustrates a screen enabling setting of information related to boom 22, outriggers 12, and a buzzer, as the information related to crane work. As the information related to boom 22, an "extension and contraction amount" indicating an extension and contraction state, a "derricking angle" indicating a derricking state, and a "swivel angle" indicating a swivel state can be set. The "existence/absence of an unused state of outriggers", and an "overhang length" indicating an overhang state can be set as information related to outriggers 12, and sounding "buzzer" in crane work can be set as information related to buzzer.

In addition to these setting, setting of an actuator for setting information of each of boom 22, and outriggers 12 can be set. More specifically, the extension and contraction speed at which boom 22 extends and contracts up to a specified "extension and contraction amount", the rising and falling speed at which a boom rises and falls up to a specified "derricking angle", the swivel speed at which a swivel base swivels up to a specified "swivel angle", and the overhang speed at which outriggers 12 overhang up to a specified "overhang length" can be set.

In the crane work information setting screen illustrated in FIG. 3, when each setting information is input and selected, and setting is completed, a worker (operator) depresses a "setting" button. When the "setting" button" is depressed, (a CPU of) controller 50 writes the setting information in the RAM, and refers the setting information at the time of implementation of a program related to crane work stored in the ROM or the like. Additionally, when a "cancel" button is depressed by a worker, the input and selected information is not reflected as the setting information.

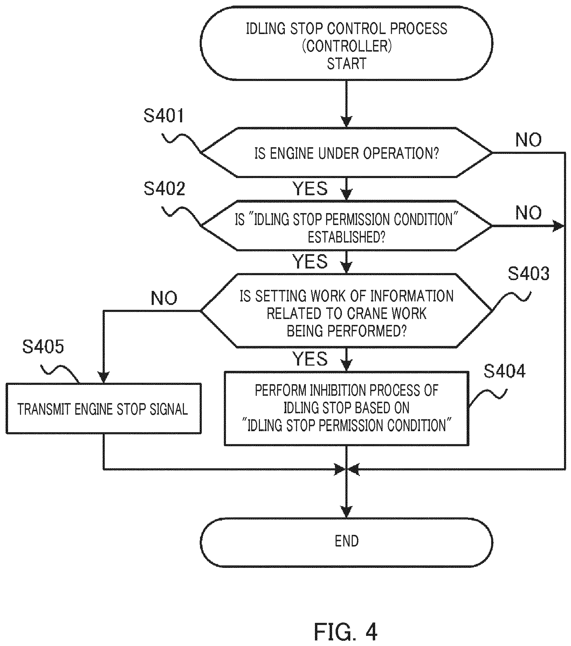

FIG. 4 is a flowchart illustrating an idling stop control process performed by the controller constituting the mobile crane according to the embodiment of the present invention.

In FIG. 4, controller 50 determines whether or not the engine is under operation (including under idling) by interrupt control at regular intervals, or the like (S401). The case where the engine is not under operation is, for example, a case where the engine is already in an idling stop state. In a case where it is not determined that the engine is under operation (NO in S401), in this determination process of S401, controller 50 does not perform any subsequent process to terminate the idling stop control process.

In a case where it is determined that the engine is under operation (YES in S401), in this determination process of S401, controller 50 then determines whether or not the idling stop permission condition is established (S402). In a case where it is not determined that the idling stop permission condition is established (NO in S402), controller 50 does not perform any subsequent process to terminate the idling stop control process.

On the other hand, in a case where it is determined that the idling stop permission condition is established (YES in S402), in this determination process of S402, controller 50 then determines whether or not the setting work of the information related to crane work is being performed, by using the screen illustrated in FIG. 3 by a worker (S403). In this "determination process whether or not the setting work of the information related to crane work is being performed", when the screen illustrated in FIG. 3 is displayed, (the CPU of) controller 50 manages the mode information (or flag information) in the "crane work setting mode" in the RAM or the like, and it is determined that setting work is being performed when this mode information is managed in the RAM.

In this determination process of S403, in a case where it is determined that the setting work of the information related to crane work is being performed (YES in S403), controller 50 inhibits (prohibits) idling stop based on the idling stop permission condition (S404). More specifically, controller 50 cancels the establishment of the idling stop permission condition, and causes the idling stop permission condition not to be established.

The "idling stop based on the establishment of the idling stop permission condition is inhibited" means that it is possible to prevent change in a state due to stop of an engine during setting work of the information related to crane work, the contents of the information displayed on the display are not changed by performing the idling stop.

In the determination process (S403) of determining whether or not the setting work of the information related to crane work is being performed, in a case where it is not determined that the setting work is being performed (NO in S403), controller 50 transmits, to motive power source unit 41, a signal for stopping engine 41a (S405).

A case where it is determined that the setting work of the information related to crane work is not being performed means, for example, a state in which the mode information (or flag information) in the "crane work setting mode" is not managed in the RAM or the like.

In the idling stop control process as described above, it is determined whether or not the setting work of the information related to crane work is being performed, and engine stop is performed, or the idling stop is inhibited. In addition to the above, by processes described below, the engine stop may be performed, or the idling stop may be inhibited.

In the process in S403 illustrated in FIG. 4, in a case where it is determined that setting work of the information relating to the crane work is being performed, controller 50 performs a process of confirming the setting contents related to crane work. In this confirmation process, it is confirmed that the display state of the information displayed on the display is only the information which is not changed before or after the idling stop, even when the idling stop is performed, while the information during the setting is the information related to crane work.

In a case where the setting contents include information only the information which is not changed before or after the idling stop, controller 50 asks a worker (operator) to confirm whether or not the idling stop based on the establishment of the idling stop permission condition is performed. When the idling stop is permitted by the worker (operator), controller 50 transmits a signal for stopping the engine, on the basis of the establishment of the idling stop permission condition.

By the above process, even when the setting work of the information related to crane work is being performed, the idling stop can be permitted depending on the setting contents, and efficient fuel consumption by the idling stop is improved.

The above embodiment is an embodiment of the present invention, and the present invention is not limited to these embodiment, and can be implemented by appropriately changing within the scope of the present invention, as defined by the claims.

### Reference Signs List

- 1: Mobile crane
- 10: Vehicle
- 20: Crane apparatus
- 25: Cab
- 30: Oil pressure supply apparatus
- 31: Oil hydraulic pump
- 40: Motive power apparatus
- 41: Motive power source unit
- 41b: Alternator
- 41d: Alternator driving control unit
- 41f: Power source cable
- 50: Controller
- 51: Operation input part
- 52: Display
- 53: Speaker
- 60: Actuator

## Claims

1. A work machine (1) comprising:
a work apparatus (20) that performs predetermined work, using an engine (41a) as a motive power source;
an engine stop section (50) that stops the engine (41a) on the basis of a predetermined engine stop condition;
a setting section (50) that sets information to be used when the predetermined work is performed using the engine (41a) as the motive power source, and is capable of setting a work mode in the work apparatus;
a determination section (50) that determines whether or not a setting state in which the work mode is set by the setting section (50) is kept; and **characterized by**
an engine stop inhibition section (50) that inhibits the engine (41a) from being stopped by the engine stop section (50) even when the predetermined engine stop condition is established, in a case where the information is being set by the setting section (50).

2. The work machine (1) according to claim 1, wherein, the work apparatus is a crane apparatus (20) that performs a crane work for lifting a cargo and horizontally transporting the cargo.

3. The work machine (1) according to claim 2, wherein,
the crane apparatus (20) includes:
an outrigger (12) that supports a machine body; and
a boom (22) that is provided so as to be able to rise and fall with respect to the machine body, and
the information is information indicating at least one work mode among an extension and contraction state of the outrigger (12), and a derricking state of the boom (22).

4. The work machine (1) according to any one of claims 1 to 3, further comprising:
an input apparatus (51) that inputs the information; and
a display apparatus (52) that displays the inputted information.

5. The work machine (1) according to any one of claims 1 to 4, wherein, the predetermined engine stop condition includes a condition that driving operation of the work apparatus (20) is not performed for a fixed time or that predetermined operation by a worker is not performed for a fixed time.

6. The work machine (1) according to any one of claims 1 to 5, wherein, the information includes information for determining a posture of the work apparatus (20) when the predetermined work is performed.

## Patentansprüche

1. Eine Arbeitsmaschine (1) aufweisend:
eine Arbeitsvorrichtung (20), die eine vorbestimmte Funktion ausführt und einen Motor (41a) als Antriebskraftquelle verwendet;
eine Motorstoppeinheit (50), die den Motor (41a) auf der Grundlage einer vorbestimmten Motorstoppbedingung stoppt;
eine Einstelleinheit (50), die zu verwendende Informationen festlegt, wenn die vorbestimmte Funktion unter Verwendung des Motors (41a) als Antriebskraftquelle ausgeführt wird, und die in der Lage ist, einen Funktionsmodus in der Arbeitsvorrichtung einzustellen;
eine Bestimmungseinheit (50), die bestimmt, ob ein Einstellzustand, in dem der Funktionsmodus durch den Einstellabschnitt (50) eingestellt wird, beibehalten wird oder nicht; und **gekennzeichnet durch**
eine Motorstoppsperreinheit (50), die verhindert, dass der Motor (41a) durch die Motorstoppeinheit (50) gestoppt wird, selbst wenn die vorbestimmte Motorstoppbedingung eingestellt ist, in einem Fall, in dem die Information durch die Einstelleinheit (50) eingestellt wird.

2. Die Arbeitsmaschine (1) nach Anspruch 1, wobei die Arbeitsvorrichtung eine Kranvorrichtung (20) ist, die eine Kranfunktion zum Heben einer Ladung und zum horizontalen Fördern der Ladung ausführt.

3. Die Arbeitsmaschine (1) nach Anspruch 2, wobei,
die Kranvorrichtung (20) einschließt:
einen Ausleger (12), der einen Maschinenkörper trägt; und
einen ausfahrbaren Ausleger (22), der so vorgesehen ist, dass er sich in Bezug auf den Maschinenkörper heben und senken kann, und
die Information eine Information ist, die wenigstens einen Funktionsmodus aus einem Ausfahr- und Einfahrzustand des Auslegers (12) und eine Kippstellung des ausfahrbaren Auslegers (22) anzeigt.

4. Die Arbeitsmaschine (1) nach einem der Ansprüche 1 bis 3, weiter umfassend:
ein Eingabegerät (51), das die Information eingibt; und
ein Anzeigegerät (52), das die eingegebene Information anzeigt.

5. Die Arbeitsmaschine (1) nach einem der Ansprüche 1 bis 4, wobei die vorbestimmte Motorstoppbedingung eine Bedingung beinhaltet, dass der Fahrbetrieb der Arbeitsvorrichtung (20) für eine festgelegte Zeit nicht ausgeführt wird oder dass ein vorbestimmter Betrieb durch einen Arbeiter für eine festgelegte Zeit nicht ausgeführt wird.

6. Die Arbeitsmaschine (1) nach einem der Ansprüche 1 bis 5, wobei die Information eine Information zur Bestimmung einer Stellung der Arbeitsvorrichtung (20) beinhaltet, wenn die vorbestimmte Funktion ausgeführt wird.

## Revendications

1. Machine de travail (1) comprenant :
un dispositif de travail (20) qui effectue un travail prédéterminé en utilisant un moteur (41a) comme source de force motrice;
une section d'arrêt du moteur (50) qui arrête le moteur (41a) sur la base d'une condition d'arrêt de moteur prédéterminée;
une section de réglage (50) qui définit l'information à utiliser lorsque le travail prédéterminé est effectué en utilisant le moteur (41a) comme source de puissance motrice et est capable de définir un mode de travail dans le dispositif de travail;
une section de détermination (50) qui détermine si un état de réglage dans lequel le mode de travail est défini par la section de réglage (50) est maintenu ou non; et **caractérisé par**
une section d'inhibition d'arrêt de moteur (50) qui empêche le moteur (41a) d'être arrêté par la section d'arrêt du moteur (50) même lorsque la condition d'arrêt de moteur prédéterminée est remplie, dans le cas où l'information est définie par la section de réglage (50).

2. Machine de travail (1) selon la revendication 1, dans laquelle le dispositif de travail est un dispositif de grue (20) qui effectue un travail de grue pour soulever une charge et pour transporter la charge horizontalement.

3. Machine de travail (1) selon la revendication 2, dans laquelle
le dispositif de grue (20) comprend:
un stabilisateur (12) qui soutient un corps de machine; et
une flèche (22) qui est prévue de manière à pouvoir monter et descendre par rapport au corps de machine, et
l'information est une information indiquant au moins un mode de travail parmi un état d'extension et de rétraction du stabilisateur (12), et un état de relevage de la flèche (22).

4. La machine de travail (1) selon l'une quelconque des revendications 1 à 3, comprenant en outre :
un dispositif d'entrée (51) qui entre les informations; et
un dispositif d'affichage (52) qui affiche les informations entrées.

5. La machine de travail (1) selon l'une quelconque des revendications 1 à 4, dans laquelle la condition d'arrêt de moteur prédéterminée comprend une condition selon laquelle l'opération de conduite du dispositif de travail (20) n'est pas effectuée pendant une durée déterminée ou selon laquelle une opération prédéterminée par un travailleur n'est pas effectuée pendant une durée déterminée.

6. La machine de travail (1) selon l'une quelconque des revendications 1 à 5, dans laquelle l'information comprend une information pour déterminer une position du dispositif de travail (20) lorsque le travail prédéterminé est effectué.
